# EUROPEAN PATENT SPECIFICATION

(11) **EP 0 943 529 B1**
(45) Date of publication and mention of the grant of the patent: **05.11.2003**
(21) Application number: 99200702.1
(22) Date of filing: 10.03.1999
(51) Int. Cl.: B62D 17/00, B60G 11/12, B60G 7/02

(54) **Fastening device for a longitudinal supporting arm of a suspended axle unit of a vehicle**
Befestigungsvorrichtung für einen Längs-Traglenker eines hängenden Achsaggregates eines Fahrzeuges
Dispositif de fixation pour un bras de support longitudinal d'un ensemble d' essieu suspendu de véhicule

(30) Priority: 17.03.1998 NL 1008615
(43) Date of publication of application: 22.09.1999
(73) Proprietor: Weweler Nederland B.V., 7332 AP Apeldoorn (NL)
(72) Inventor: Zantinge, Johan Michiel, 6991 HK Rheden (NL)
(74) Representative: Iemenschot, Johannes Andreas, Ir.

(56) References cited:
- EP-A- 0 230 485
- EP-A- 0 450 942
- US-A- 3 960 388
- US-A- 4 493 493
- US-A- 4 650 208
- US-A- 5 775 719

## Description

The invention relates to a fastening device for a longitudinal supporting arm of a suspended axle unit of a vehicle according to the preamble of claim 1.

A fastening device of this type, which offers the possibility of aligning an axle unit which is mounted under the vehicle, is known from US-A-3960388. This document discloses that after alignment of the supporting arm (trailing arm 22) by postioning the fastening bolt in the longitudinal holes, the adjustment element (plate 38, 40) is initially secured by means of the fastening bolt and, thereafter, is welded to the support bracket.

The object of the invention is to provide an improved fastening device with which the position of the fastening bolt in the slots in the support bracket can be accurately adjusted using simple adjustment means.

This object is achieved by a fastening device of claim 1.

By tightening the fastening bolt the U-shaped bracket is fixedly clamped onto the support bracket and the position of the supporting arm in logitudinal direction is fixed.

Advantageous and practical embodiments of the fastening device according to the invention are specified in the dependent claims.

The invention will be explained in more detail in the following description of a number of embodiments of the device according to the invention, with reference to the drawing, in which:
Fig. 1 diagrammatically shows a wheel axle suspension of an axle unit of a vehicle,
Fig. 2 shows a perspective view of a particular embodiment of a fastening device which is not part of the invention,
Fig. 3 shows a perspective view of the various components of the fastening device of Fig. 2,
Fig. 4 shows a side view, partially in section, of the fastening device of Fig. 2,
Figs. 5 to 8 show two embodiments of an adjustment element which can be used in a fastening device according to the invention.

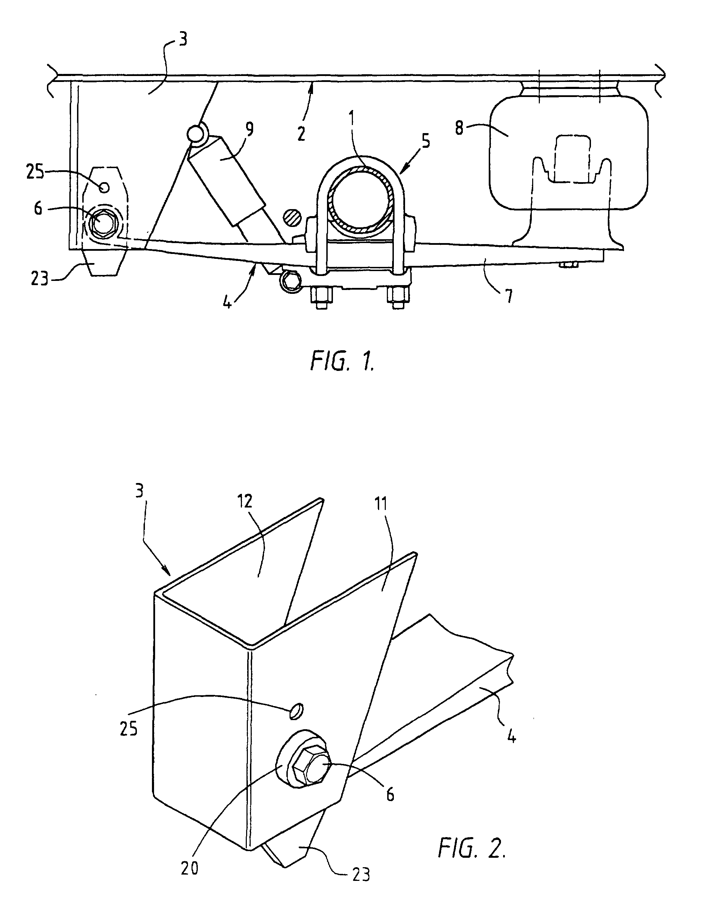

Fig. 1 diagrammatically shows a wheel axle suspension of an axle unit of a vehicle. The wheel axle is denoted by the reference numeral 1. The wheel axle 1, on which one or more wheels are arranged at both ends, is illustrated as a hollow round axle. However, the wheel axle 1 may also be square or have some other cross section. The vehicle is usually provided with a wheel axle suspension on both sides.

The wheel axle suspension comprises a support bracket 3 which is fastened to the chassis 2 of the vehicle and a supporting arm 4 for the wheel axle 1, which arm is fastened pivotably to the support bracket 3 and extends in the longitudinal direction of the vehicle. The wheel axle is fixed to the supporting arm 4 in a manner known per se, by means of a U-shaped clamp 5.

The supporting arm 4 is fastened to the support bracket 3 by means of a fastening bolt 6. In the embodiment illustrated, an end section 7 of the supporting arm 4 extends beyond the wheel axle 1. A pneumatic spring 8 is arranged between this end section 7 and the chassis 2. Furthermore, a shock absorber 9 is arranged between the supporting arm 4 and the support bracket 3.

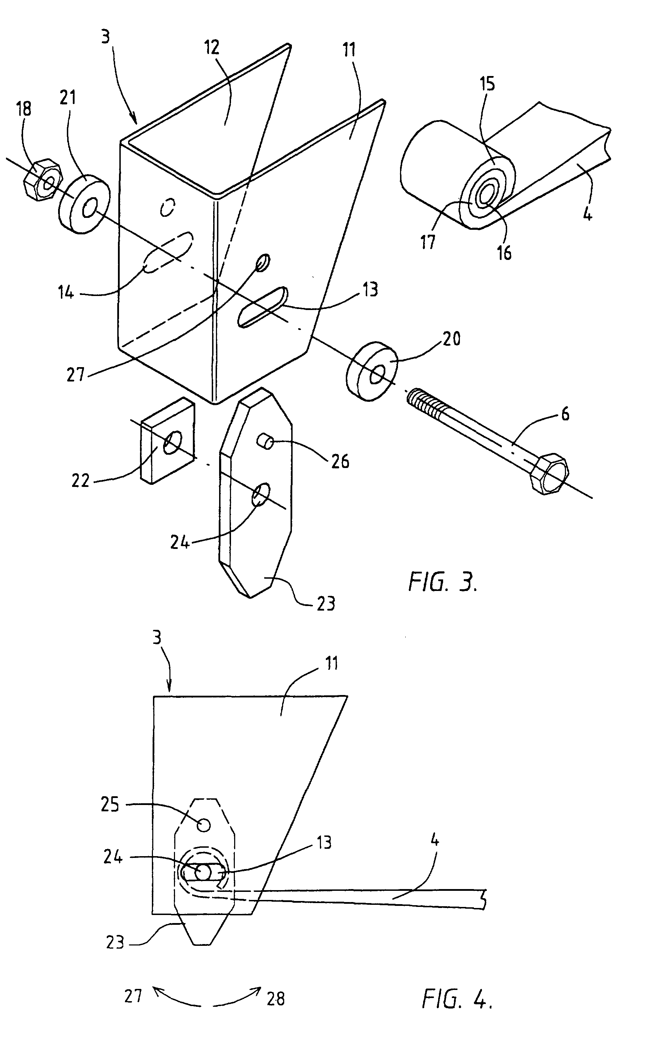

As is also shown in Figs. 2 and 3, the support bracket 3 comprises two side plates 11 and 12, and the support bracket 3 is open towards the rear, as seen in the direction of travel. The fastening bolt 6 extends in the transverse direction through the support bracket 3 and fits through holes 13 and 14 in the side plates 11 and 12 of the support bracket 3. The holes 13 and 14 are designed as slots which extend substantially in the direction of the longitudinal supporting arm 4.

At the end which is mounted in the support bracket 3, the supporting arm 4 is bent round so as to form an eyelet 15. A bush 16 extends through this eyelet 15, a flexible (rubber) sleeve 17 being arranged between the bush 16 and the eyelet 15. On both sides, the bush 16 projects slightly beyond the supporting arm 4. In the mounted position of the supporting arm 4, the bush 16 is clamped tight in the axial direction between the side plates 11 and 12 of the support bracket 3, by means of the fastening bolt 6 with nut 18. The flexibility of the sleeve 17 allows the supporting arm 4 to pivot slightly about the fixed bush 16.

In order to provide the head 19 and the nut 18 of the fastening bolt with sufficient load-bearing area, rings 20 and 21 are arranged on the outside of the support bracket 3, between the head 19 of the fastening bolt 6 and the side plate 11 of the support bracket 3, on the one hand, and between the nut 18 and the side plate 12 of the support bracket 3, on the other hand.

An adjustment plate 23 which is provided with a hole 24 through which the fastening bolt 6 fits accurately is arranged between the side plate 11 of the support bracket 3 and the bush 16. The adjustment plate 23 has two functions, namely to transmit the clamping force provided by the fastening bolt 6 uniformly onto the bush 16, and secondly to adjust the position of the fastening bolt 6 in the slots 13 and 14 and therefore the position of the fastening point (pivot point) of the supporting arm 4 in the longitudinal direction of the vehicle. This adjustment is necessary in order to align the axle 1 of the vehicle.

The adjustment plate 23 can pivot about a pivot point 25 which lies at a certain distance above the fastening bolt 6 and has a pivot axis which runs parallel to the fastening bolt 6. On the underside, the adjustment plate 23 projects beyond the support bracket 3. The pivot of the adjustment plate 23 may, for example, comprise a round pin 26 which is arranged on the adjustment plate 23 and engages in a hole 27 in the side wall 11 of the support bracket 3. The pin 26 which engages in the hole 27 has an additional advantage during assembly, since the adjustment plate 23 remains suspended from the pin 26.

Also, a second adjustment plate 23 may be arranged between the side plate 12 of the support bracket 3 and the bush 16. However, this is not strictly necessary. If a second adjustment plate 23 is not provided, a plate with a hole which fits around the fastening bolt 6 must be arranged between the side plate 12 of the support bracket 3 and the bush 16, in order to transmit the clamping force provided by the fastening bolt 6 uniformly onto the bush 16 on the side of the side plate 12 as well. A plate of this kind may be of simple design, such as the square plate 22 illustrated in Fig. 3. However, the plate may also have a different shape.

It is simple to adjust the position of the fastening bolt 6 in the slots 13 and 14 and therefore the position of the fastening point of the supporting arm 4. After the supporting arm 4 has been mounted in the support bracket 3 with the aid of the fastening bolt 6, and the nut 18 has been tightened to some extent, a hammer can be used to move that part of the adjustment plate or adjustment plates 23 which projects beyond the support bracket 3 on the underside forwards or backwards, in the direction of arrow 27 or 28. This causes the adjustment plate 23 to rotate about the pivot point 25 and move the hole 24 in the adjustment plate, through which the fastening bolt 6 fits, and therefore also the fastening point of the supporting arm 4 forwards or backwards. When the fastening bolt 6 has reached the desired position, the nut 18 is tightened firmly with a predetermined torque. The fastening bolt 6, and therefore the fastening point of the supporting arm 4 in the support bracket 3, is therefore fixed.

Hereinbefore an embodiment of a fastening device which is not part of the invention is shown.

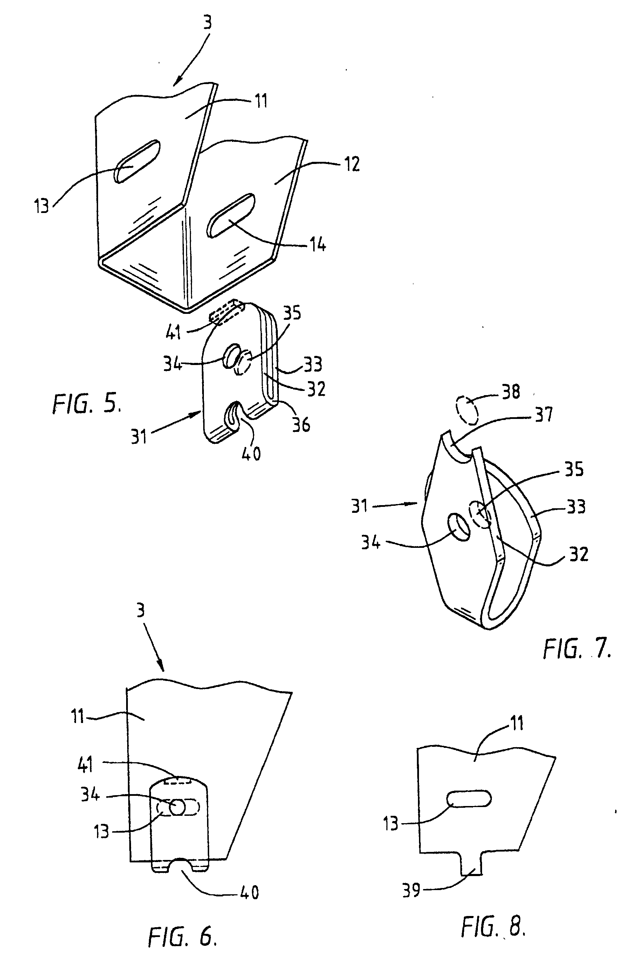

Instead of the adjustment plate 23, the fastening device according to the invention is provided with a U-shaped adjustment bracket as the adjustment element, as illustrated diagrammatically in Figs. 5 to 8.

Fig. 5 shows the bottom part of the support bracket 3 with slots 13 and 14, as well as a U-shaped adjustment bracket 31. The bracket 31 has two limbs 32 and 33 which are each provided with a hole 34 and 35, respectively, through which the fastening bolt 6 (not shown) can fit accurately. In the mounted position, the adjustment bracket 31 engages around a side plate 11 or 12 of the support bracket 3, as shown in Fig. 6.

The connection piece 36 between the limbs 32 and 33 bears against the bottom edge of the side plate 11, so that the adjustment bracket cannot rotate, or can scarcely rotate, about the fastening bolt 6 in the mounted position.

An adjustment bracket 31 may be arranged on one or both sides of the support bracket.

The position of the fastening bolt 6 in the slots 13 and 14 is adjusted in more or less the same way as when an adjustment plate 23 is used. When the nut 18 has been tightened to a certain extent, the position of the adjustment bracket 31, and therefore the position of the fastening bolt, is adjusted by striking the adjustment bracket(s) 31 or the head 19 and/or the nut 18 of the fastening bolt 6 with a hammer. This moves the adjustment bracket 31 forwards or backwards. When the correct position has been reached, the nut 18 is tightened firmly with a predetermined torque. The adjustment bracket 31 does not rotate with the nut.

The adjustment bracket 31 may be provided, on the top side, with a lip which is bent outwards and serves to prevent rotation of the (hexagonal) head of the fastening bolt 6. In Figs. 5 and 6, a lip of this kind is illustrated in dashed lines and is denoted by the reference numeral 41.

Fig. 7 shows another embodiment of the U-shaped adjustment bracket 31. On the top side, the limb 32 has a cutout 37 in which a positioning projection 38 arranged on the support bracket 3 can engage.

Fig. 8 shows the side plate 11 of the support bracket 3, this side plate being provided with a positioning projection 39 which is able to engage in a cutout 40 in the connection piece 36 of the U-shaped adjustment bracket 31.

## Claims

1. Fastening device for a longitudinal supporting arm (4) of a suspended axle unit of a vehicle, said fastening device comprising a support bracket (3), a fastening bolt (6) and associated nut and adjustment means, the support bracket (3) being adapted to be fastened to the underside of a vehicle chassis (2) being, open towards the rear, as seen in the direction of travel, and having two side plates (11, 12), the longitudinal supporting arm (4) being mounted in the support bracket (3) by means of the fastening bolt (6) which extends transversely to the supporting arm through a fastening eyelet at the end of the supporting arm and the support bracket and fits through holes (13, 14) in the side plates (11, 12) of the support bracket, these holes being designed as slots which extend substantially in the direction of the longitudinal supporting arm, and the adjustment means being provided for the purpose of adjusting the position of the fastening bolt in the slots, the adjustment means comprising at least one adjustment element (31) which is provided with a hole (34, 35) through which the fastening bolt fits accurately, which at the location of the fastening bolt can be displaced over a side plate (11;12) of the support bracket only in substantially the longitudinal direction of the slot, and which can be clamped to the side plate in question by means of the fastening bolt (6),
**characterized in that** the adjustment element (31) is a U-shaped adjustment bracket (31) which on both sides engages around a side plate (11;12) of the support bracket (3), the two limbs (32, 33) of the U-shaped bracket each being provided with a hole (34, 35) through. which the fastening bolt (6) fits accurately, and the connection piece (36) between the two limbs bearing against the bottom edge of the corresponding side plate (11;12) of the support bracket (3).

2. Fastening device according to claim 1, **characterized in that** an adjustment element (31) is arranged on both sides of the support bracket.

3. Fastening device according to claim 1 or 2, **characterized in that** the adjustment element (31) is made from a hard steel grade.

## Patentansprüche

1. Befestigungsvorrichtung für einen Längs-Tragarm (4) einer aufgehängten Achseneinheit eines Fahrzeugs, wobei die Befestigungsvorrichtung einen Tragbügel (3), eine Befestigungsschraube (6) und eine dazugehörige Mutter und eine Einstelleinrichtung umfasst, und der Tragbügel (3) so eingerichtet ist, dass er an der Unterseite eines Fahrzeugchassis (2) befestigt wird, in der Fahrtrichtung gesehen nach hinten hin zu offen ist und zwei seitliche Platten (11, 12) aufweist, wobei der Längs Tragarm (4) in dem Tragbügel (3) mittels der Befestigungsschraube (6) angebracht ist, die sich quer zu dem Tragarm durch eine Befestigungsöse am Ende des Tragarms und den Tragbügell hindurch erstreckt und durch Löcher (13, 14) in den Seitenplatten (11, 12) des Truagbügels hindurch passt, wobei diese Löcher als Schlitze ausgeführt sind, die sich im Wesentlichen in der Richtung des Längs-Tragarms erstrecken, und die Einstelleinrichtung vorhanden ist, um die Position der Befestigungsschraube in den Schlitzen einzustellen, wobei die Einstelleinrichtung wenigstens ein Einstellelement (31) umfasst, das mit einem Loch (34, 35) versehen ist, durch das die Befestigungsschraube genau hindurchpasst, und das an der Position der Befestigungsschraube über einer Seitenplatte (11; 12) des Tragbügels lediglich im Wesentlichen in der Längsrichtung des Schlitzes verschoben werden kann, und das mittels der Befestigungsschraube (6) an der betreffenden Seitenplatte festgeklemmt werden kann,
**dadurch gekennzeichnet, dass** das Einstellelement (31) ein U-förmiger Einstellbügel (31) ist, der an beiden Seiten um eine Seitenplatte (11; 12) des Tragbügels(3) herumgreift, wobei die beiden Schenkel (32, 33) des U-förmigen Bügels jeweils mit einem Loch (34, 35) versehen sind, durch das die Befestigungsschraube (6) genau hindurchpasst, und das Verbindungsteil (36) zwischen den beiden Schenkeln an der Unterkante der entsprechenden Seitenplatte (11; 12) des Tragbügels (3) anliegt.

2. Befestigungsvorrichtung nach Anspruch 1, **dadurch gekennzeichnet, dass** ein Einstellelement (31) auf beiden Seiten des Tragbügels angeordnet ist.

3. Befestigungsvorrichtung nach Anspruch 1 oder 2, **dadurch gekennzeichnet, dass** das Einstellelement (31) aus einer harten Stahlsorte besteht.

## Revendications

1. Dispositif de fixation pour un bras de support longitudinal (4) d'un train de roues suspendu d'un véhicule, ledit dispositif de fixation comprenant une console de support (3), un boulon de fixation (6) et un écrou associé et des moyens de réglage, la console de support (3) étant adaptée pour être fixée au dessous du châssis d'un véhicule (2), étant ouvert à l'arrière, lorsque vu dans le sens de marche, et comportant deux plaques latérales (11, 12), le bras de support longitudinal (4) étant monté sur la console de support (3) à l'aide du boulon de fixation (6) qui s'étend transversalement par rapport au bras de support à travers un oeillet de fixation à l'extrémité du bras de support et de la console de support et qui s'insère à travers des trous (13, 14) dans les plaques latérales (11, 12) de la console de support, ces trous étant conçus comme des fentes qui s'étendent sensiblement dans la direction du bras de support longitudinal, et les moyens de réglage étant prévus dans le but de régler la position du boulon de fixation dans les fentes, les moyens de réglage comprenant au moins un élément de réglage (31) qui est muni d'un trou (34, 35) à travers lequel le boulon de fixation s'insère exactement, qui, à l'emplacement du boulon de fixation, peut être déplacé au-dessus d'une plaque latérale (11, 12) de la console de support uniquement dans sensiblement la direction longitudinale de la fente, et qui peut être serré sur la plaque latérale en question à l'aide du boulon de fixation (6), **caractérisé en ce que** l'élément de réglage (31) est une console de réglage en forme de U (31) qui vient en prise des deux côtés autour d'une plaque latérale (11, 12) de la console de support (3), chacune des deux branches (32, 33) de la console en forme de U étant munie d'un trou (34, 35) à travers lequel le boulon de fixation (6) s'insère exactement, et la pièce de raccordement (36) entre les deux branches s'appuyant contre le bord inférieur de la plaque latérale correspondante (11, 12) de la console de support (3).

2. Dispositif de fixation selon la revendication 1, **caractérisé en ce qu'**un élément de réglage (31) est disposé des deux côtés de la console de support.

3. Dispositif de fixation selon la revendication 1 ou 2, **caractérisé en ce que** l'élément de réglage (31) est fait dans une nuance d'acier dur.
